# DEMANDE DE BREVET EUROPEEN

(11) **EP 1 236 531 A1**
(43) Date de publication de la demande: **04.09.2002**
(21) Numéro de dépôt: 02356039.4
(22) Date de dépôt: 27.02.2002
(51) Int. Cl.: B23K 1/20

(54) **Procédé pour la mise en place d'un anneau de brasure sur un raccord tubulaire**

(30) Priorité: 02.03.2001 FR 0102907
(71) Demandeur: Davis, Jean-Claude, 01800 Meximieux (FR)
(72) Inventeur: Davis, Jean-Claude, 01800 Meximieux (FR)
(74) Mandataire: Bratel, Gérard

(57) **Abrégé**

Le procédé permet la mise en place, à froid, d'un anneau de brasure contenant déjà le « flux » nécessaire à l'opération de brasage.

Partant d'un raccord (2) de conformation initiale cylindrique, on réalise une emboîture annulaire (8) sur l'extrémité (3) du raccord, puis on met en place, dans cette emboîture, l'anneau de brasure (9) préalablement fabriqué et contenant le flux. Enfin, la région d'extrémité du raccord (2) est sertie, tout autour de l'anneau de brasure (9) préalablement posé, de manière à emprisonner cet anneau (9) dans une gorge annulaire (15). Ce procédé s'applique aux raccords droits, coudés, en « té » ou de réduction de section, pour installations sanitaires.

## Description

La présente invention concerne un procédé pour la mise en place d'un anneau de brasure sur un raccord tubulaire. Cette invention se rapporte au domaine technique du raccordement des canalisations de fluides, et notamment, mais non exclusivement, les canalisations métalliques dans les installations sanitaires.

Traditionnellement, l'apport de brasure dans les raccords tubulaires, pour la réalisation de branchements divers, est effectué seulement au moment de l'utilisation du raccord, en déposant de la brasure à chaud, à l'état fondu, par exemple dans un évidement annulaire ouvert vers l'extérieur (voir brevet US 3998376) ou dans des petits évidements ou poches intérieurs (voir brevet US 1901820).

Il existe aussi des raccords tubulaires pour les installations sanitaires, du genre coudes, tés, manchons ou réductions de section, munis d'une gorge préalablement exécutée par repoussage, dans laquelle est déposée à chaud de la brasure. Ce procédé existant permet théoriquement d'éviter l'apport de brasure au moment de l'utilisation des raccords, puisque cette brasure est déjà contenue dans les gorges. Au moment de l'utilisation du raccord, l'opérateur doit seulement ajouter, sur l'extrémité du tube à raccorder en s'emmanchant par l'extérieur, le « flux » qui assurera une bonne prise de la brasure, ce flux ne pouvant être inclus au départ, du fait même de la dépose à chaud de la brasure.

Ainsi, le procédé existant ne supprime pas entièrement l'apport d'une matière extérieure, au moment de l'exécution de l'opération de brasage. De plus, dans ce procédé connu, la dépose à chaud de la brasure, sous forme de métal en fusion, est réalisée au moyen d'une buse, pouvant être obstruée par le moindre courant d'air qui solidifie la brasure. La dépose de cette brasure risque donc d'être incomplète ou irrégulière, de sorte qu'un contrôle visuel s'impose pour vérifier la bonne répartition de la brasure.

Le brevet US N° 1889974 montre un anneau de brasure, utilisé pour la fixation d'un embout fileté à l'extrémité d'un tube. L'anneau de brasure est ici mis en place au moment de la fixation de l'embout, et non pas à l'avance, aucun moyen n'étant prévu pour son maintien en place sur l'un ou l'autre des composants à assembler. De plus, ce document ne s'applique pas à des raccords tubulaires.

La présente invention vise à éviter tous les inconvenients précédemment exposés, en fournissant un procédé perfectionné qui évite l'ajout du flux au moment de l'utilisation du raccord, et qui simplifie ainsi considérablement l'opération de brasage, tout en améliorant sa qualité, grâce à une mise en place à froid de la brasure.

A cet effet, l'invention a pour objet un procédé pour la mise en place d'un anneau de brasure sur un raccord tubulaire, le procédé consistant essentiellement, en partant d'un raccord de conformation initiale cylindrique :
■ à réaliser par poinçonnage sur l'extrémité du raccord, ou à faible distance de cette extrémité, une emboîture annulaire,
■ à mettre en place, dans cette emboîture, un anneau de brasure préalablement fabriqué, et contenant déjà le flux nécessaire à l'opération de brasage, et
■ à sertir la région d'extrémité du raccord, tout autour de l'anneau de brasure précédemment posé, de manière à emprisonner cet anneau dans une gorge annualire,
l'ensemble des opérations précédentes étant réalisé à froid.

Ainsi, toute la mise en place de la brasure est effectuée à froid, de sorte que la qualité de la brasure n'est pas altérée par la chaleur, et que cette brasure, sous la forme d'un anneau très malléable, contient dès sa mise en place tout le flux nécessaire, l'anneau de brasure étant maintenu sans déformation dans l'emboîture par l'opération de sertissage. Tous les raccords, ainsi pourvus d'un anneau de brasure incorporant le flux, pourront être garantis bons pour leur utilisation, la présence de la quantité voulue de brasure étant en particulier assurée. L'utilisateur final de ces raccords aura seulement à les chauffer extérieurement, sans aucun apport de matière, pour obtenir un brasage parfaitement dosé sur la périphérie du tube à raccorder, engagé dans l'emboîture du raccord, ce qui garantit une parfaite étanchéité de la liaison obtenue après brasage.

Avantageusement, le diamètre intérieur de l'anneau de brasure est prévu, initialement, légèrement supérieur au diamètre extérieur nominal du tube prévu pour être engagé dans le raccord, et au moment de l'opération finale de sertissage, le diamètre intérieur de l'anneau de brasure est centré et calibré sur un mandrin cylindrique, mis en place automatiquement durant cette opération.

Le diamètre de la section de l'anneau est, quant à lui, choisi en fonction de la quantité de brasure nécessaire.

Le sertissage final, réalisant l'emprisonnement de l'anneau de brasure sur le raccord tubulaire, est réalisable par une déformation à froid de ce raccord, créant sur le raccord tubulaire une gorge annulaire de section en « V » ou en « U » à une faible distance de l'extrémité dudit raccord.

Dans une variante, ce sertissage de l'anneau de brasure est réalisé par une déformation à froid du raccord à son extrémité, avec retournement de celle-ci vers l'intérieur, créant sur le raccord tubulaire une gorge annulaire de profil arrondi, par exemple semi-circulaire.

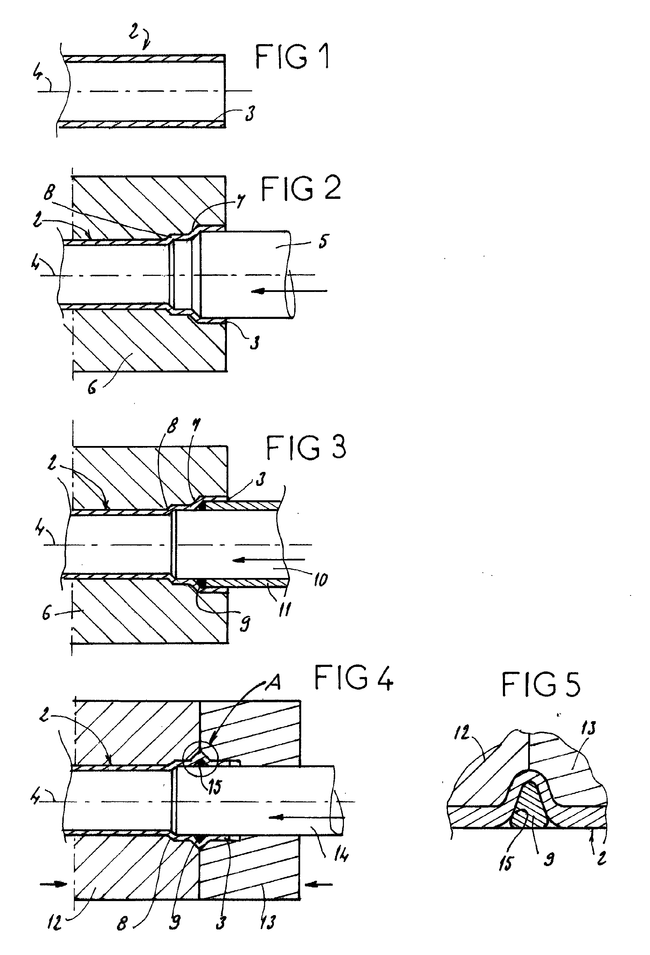

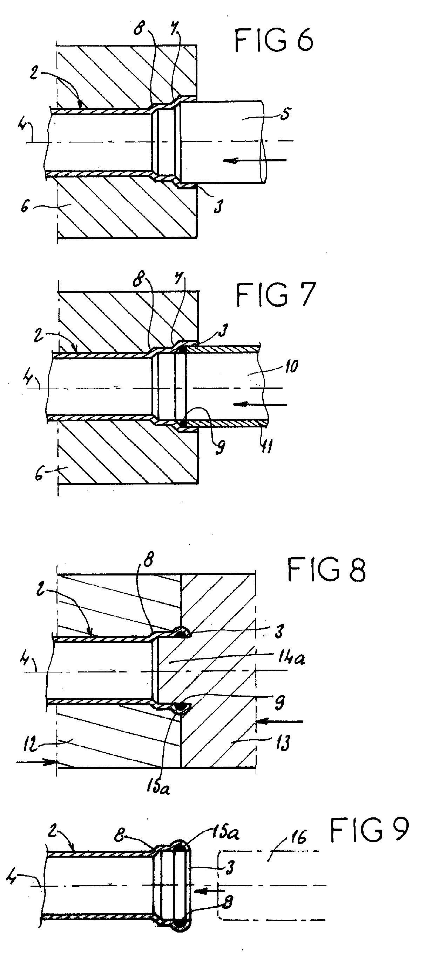

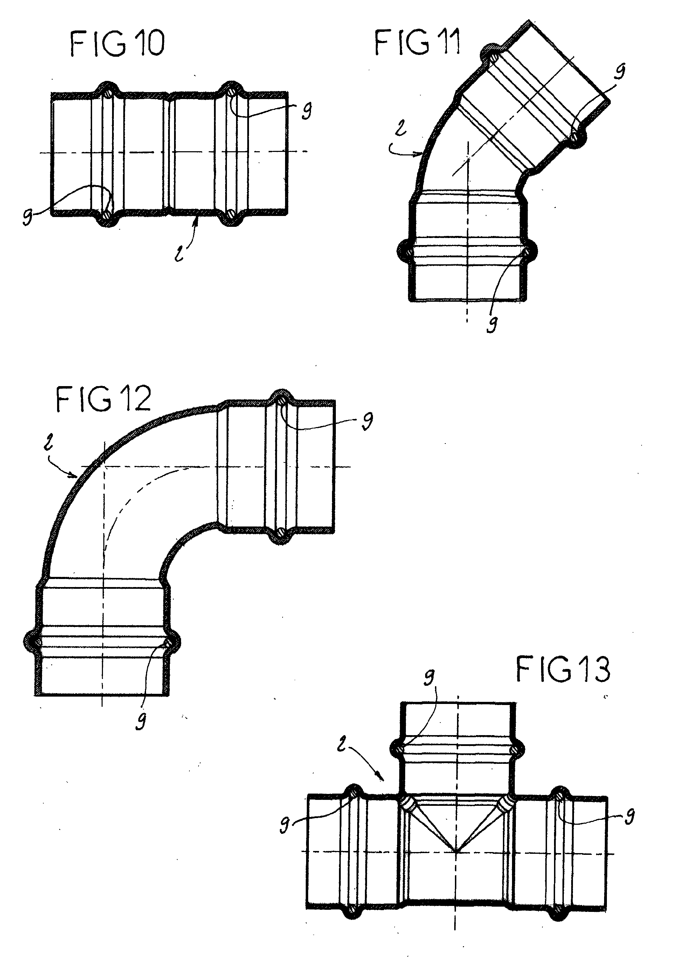

L'invention sera mieux comprise à l'aide de la description qui suit, en référence au dessin schématique annexé illustrant, à titre d'exemples non limitatifs, deux modes de mise en oeuvre de ce procédé pour la mise en place d'un anneau de brasure sur un raccord tubulaire, et illustrant aussi des applications de ce procédé :
■ figure 1 est une vue partielle, en coupe passant par l'axe d'un raccord tubulaire dans son état initial ;
■ figures 2, 3 et 4 sont des vues en coupe illustrant les opérations successives de déformation du raccord de figure 1, avec mise en place et retenue de l'anneau de brasure ;
■ figure 5 représente, à échelle agrandie, le détail A de la figure 4, avec l'anneau de brasure emprisonné ;
■ figures 6, 7 et 8 sont des vues en coupe correspondant respectivement aux figures 2, 3 et 4, mais relatives à un autre mode de mise en oeuvre de l'invention ;
■ figure 9 représente le raccord dans son état final, prêt à recevoir le tube à raccorder ;
■ figure 10, 11, 12 et 13 sont des vues en coupe de divers raccords tubulaires appliquant le procédé selon l'invention.

La figure 1 montre, dans son état initial et partiellement, un raccord tubulaire 2, dont l'extrémité prévue pour recevoir un tube à raccorder est indiquée en 3. Le raccord tubulaire 2 présente initialement, dans sa partie concernée par la présente invention, une conformation parfaitement cylindrique, centrée sur un axe 4.

Une première opération de formage du raccord 2, illustrée sur la figure 2, est réalisée au moyen d'un poinçon 5 déplacé suivant l'axe 4, le raccord 2 étant maintenu dans une matrice 6. En correspondance avec les formes du poinçon 5 et de la matrice 6, cette opération conduit à la formation d'une emboîture, définie par deux épaulements annulaires 7 et 8, formés à une relativement faible distance de l'extrémité 3 du raccord 2, qui se trouve ainsi évasée.

Ensuite, comme montré sur la figure 3, il est procédé à la mise en place d'un anneau torique de brasure 9. L'anneau de brasure 9 est placé sur un simbleau 10, qui porte un dévêtisseur coulissant 11, l'ensemble étant déplacé suivant l'axe 4 et engagé dans l'emboîture de ce raccord 2, toujours maintenu dans la matrice 6.

On notera ici que le diamètre intérieur initial de l'anneau de brasure 9 est légèrement supérieur, par exemple de 5/10 mm, au diamètre extérieur nominal du tube à raccorder.

Il est encore à noter que cet anneau de brasure 9, en alliage métallique par exemple à base d'étain ou de cuivre, contient déjà le « flux » nécessaire pour l'opération de brasage.

Après retrait du simbleau 10 et du dévêtisseur 11, l'anneau de brasure 9 reste en place dans le raccord tubulaire 2, contre l'épaulement annulaire 7 le plus proche de l'extrémité 3 du raccord 2.

Enfin, comme le montrent les figures 4 et 5, il est procédé à une opération de sertissage du raccord 2, placé dans deux matrices opposées 12 et 13, tandis qu'un mandrin cylindrique 14 est introduit à l'intérieur de ce raccord 2. Au cours de ce sertissage final, le rapprochement des deux matrices 12 et 13 déforme le raccord 2, pour créer, dans la zone comportant précédemment l'épaulement 7, une gorge annulaire 15 de section en « V » ou en « U », bien visible sur la vue de détail de la figure 5. L'anneau de brasure 9 se trouve finalement emprisonné dans cette gorge 15.

Au moment de l'opération finale de sertissage, l'anneau de brasure 9 vient se centrer et se calibrer sur le mandrin 14, dont le diamètre extérieur correspond à celui du tube à raccorder. Le diamètre intérieur final de l'anneau de brasure 9 correspond ainsi au diamètre extérieur du tube à raccorder.

Les figures 6 à 8, sur lesquelles les éléments, correspondant à ceux décrits précédemment, sont désignés par les mêmes repères, illustrent une variante du procédé de l'invention.

Dans son état initial (ici non représenté), le raccord tubulaire 2 présente toujours une conformation parfaitement cylindrique, du moins dans sa partie ici concernée. Une première opération de poinçonnage, montrée sur la figure 6, forme sur ce raccord 2 une emboîture avec double épaulement annulaire 7, 8, le premier épaulement 7 étant ici très proche de l'extrémité 3 du raccord 2.

Ensuite, comme le montre la figure 7, il est procédé à la mise en place de l'anneau de brasure 9, contenant le flux, ici encore au moyen d'un outillage à simbleau 10 et dévêtisseur 11. L'anneau de brasure 9 prend ainsi place contre l'épaulement annulaire 7.

Enfin, il est procédé à l'opération de sertissage illustrée à la figure 8, visant à emprisonner l'anneau de brasure 9. Cette opération finale est réalisée en plaçant le raccord 2 entre deux matrices 12 et 13, dont l'une forme elle-même, en son centre, un court mandrin cylindrique 14a. Cette opération crée, par rapprochement des deux matrices 12 et 13, un retournement de l'extrémité 3 du raccord 2 vers l'intérieur qui forme une gorge annulaire 15a de profil arrondi, sensiblement semi-circulaire, dans laquelle se trouve finalement retenu l'anneau de brasure 9.

Dans tous les cas, l'on obtient ainsi un raccord tubulaire 2 pourvu d'un anneau de brasure 9 incorporant le flux, comme illustré sur la figure 9. Ce raccord 2 peut être un manchon droit, un coude, un « té », ou une réduction de section, comme précisé ci-après. Au moment de l'utilisation du raccord 2, c'est-à-dire lors de l'opération de raccordement d'un tube 16, il suffit de chauffer ce raccord 2 contenant l'anneau de brasure 9 avec flux, pour obtenir une liaison étanche avec la périphérie du tube 16 introduit dans l'emboîture jusqu'à venir en butée contre le second épaulement annulaire 8.

Le procédé, décrit ci-dessus, admet pour l'anneau 9 divers types de brasure, dont le point de fusion peut varier d'environ 180° C à environ 725° C. A titre d'exemples, on peut citer ici la brasure en alliage cupro-phosphore, ou la brasure en alliage cupro-phosphore-argent, cette brasure contenant toujours le flux, selon le principe de la présente invention.

Les figures 10 à 13 montrent des raccords tubulaires de diverses configurations, qui appliquent le procédé précédemment décrit.

La figure 10 montre un raccord 2 en forme de manchon droit, qui contient deux anneaux de brasure 9, emprisonnés dans des gorges respectives, associées à ses deux extrémités.

La figure 11 montre un raccord 2 coudé à 45°, qui contient deux anneaux de brasure 9, emprisonnés dans des gorges respectives, associées à ses deux extrémités.

La figure 12 montre un raccord 2 coudé à 90 °, qui contient deux anneaux de brasure 9, emprisonnés dans des gorges respectives, associées à ses deux extrémités.

Enfin, la figure 13 montre un raccord 2 en "té", qui contient trois anneaux de brasure 9, emprisonnés dans des gorges respectives, en correspondance avec les trois branchements de ce raccord 2.

L'on ne s'éloignerait pas du cadre de l'invention, telle que définie dans les revendications annexées :
■ en complétant le mode opératoire précédemment décrit par toutes opérations annexes, par exemple en dégraissant et brillantant le raccord avant la pose de l'anneau de brasure et avant le sertissage final, pour éliminer toutes traces d'huile ;
■ en réalisant l'anneau de brasure en tout alliage approprié, tel que : brasure à l'étain, brasure cupro-phosphore, brasure à l'argent etc.., ;
■ en donnant des formes et dimensions diverses aux déformations de raccord, réalisant l'emboîture et le sertissage final, et en utilisant à cet effet des outillages appropriés de tout type;
■ en appliquant le procédé à des raccords tubulaires de tous genres, qu'il s'agisse de raccords droits, de coudes, de « tés » ou de réductions, ou d'autres pièces analogues, de toutes configurations et dimensions, recevant un ou plusieurs anneaux de brasure.

## Revendications

1. Procédé pour la mise en place d'un anneau de brasure sur un raccord tubulaire, **caractérisé en ce qu'**il consiste essentiellement, en partant d'un raccord (2) de conformation initiale cylindrique :
■ à réaliser par poinçonnage sur l'extrémité (3) du raccord (2), ou à faible distance de cette extrémité (3), une emboîture annulaire (7, 8) ;
■ à mettre en place, dans cette emboîture (7, 8), un anneau de brasure (9) préalablement fabriqué, et contenant déjà le flux nécessaire à l'opération de brasage, et
■ à sertir la région d'extrémité du raccord (2), tout autour de l'anneau de brasure (9) précédemment posé, de manière à emprisonner cet anneau (9) dans une gorge annulaire (15),
l'ensemble des opérations précédentes étant réalisé à froid.

2. Procédé pour la mise en place d'un anneau de brasure selon la revendication 1, **caractérisé en ce que** le diamètre intérieur de l'anneau de brasure (9) est prévu, initialement, légèrement supérieur au diamètre extérieur nominal du tube (16) prévu pour être engagé dans le raccord (2), et **en ce que**, au moment de l'opération finale de sertissage, le diamètre intérieur de l'anneau de brasure (9) est centré et calibré sur un mandrin cylindrique(14, 14a), mis en place automatiquement durant cette opération.

3. Procédé pour la mise en place d'un anneau de brasure selon la revendication 1 ou 2, **caractérisé en ce que** l'emboîture, réalisée par poinçonnage sur le raccord (2), est définie par deux épaulements annulaires (7, 8), formés à une faible distance de l'extrémité (3) du raccord (2), la mise en place de l'anneau de brasure (9) étant effectuée contre l'épaulement annulaire (7) le plus proche de l'extrémité (3) du raccord (2).

4. Procédé pour la mise en place d'un anneau de brasure selon l'une quelconque des revendications 1 à 3, **caractérisé en ce que** le sertissage final, réalisant l'emprisonnement de l'anneau de brasure (9) sur le raccord tubulaire (2), est réalisé par une déformation à froid de ce raccord (2), créant sur le raccord tubulaire (2) une gorge annulaire (15) de section en « V » ou en « U » à une faible distance de l'extrémité (3) dudit raccord (2).

5. Procédé pour la mise en place d'un anneau de brasure selon l'une quelconque des revendications 1 à 3, **caractérisé en ce que** le sertissage final, réalisant l'emprisonnement de l'anneau de brasure (9) sur le raccord tubulaire (2), est réalisé par une déformation à froid de ce raccord (2) à son extrémité (3), par un retournement de celle-ci vers l'intérieur, créant sur le raccord tubulaire (2) une gorge annulaire (15a) de profil arrondi, par exemple semi-circulaire.

6. Raccord tubulaire (2), tel que manchon droit, coude, « té » ou réduction de section, **caractérisé en ce qu'**il est pourvu d'au moins un anneau de brasure (9) incorporant le flux, mis en place sur ce raccord (2) par le procédé selon l'une quelconque des revendications 1 à 5.
